# FASCICULE DE BREVET EUROPEEN

(11) **EP 0 771 057 B1**
(45) Date de publication et mention de la délivrance du brevet: **20.09.2000**
(21) Numéro de dépôt: 96402235.4
(22) Date de dépôt: 21.10.1996
(51) Int. Cl.: H02B 13/035

(54) **Poste blindé à moyenne tension**
Mittelspannungsschaltanlage
Metal clad, medium voltage switchgear

(30) Priorité: 26.10.1995 FR 9512642
(43) Date de publication de la demande: 02.05.1997
(73) Titulaire: GEC ALSTHOM T ET D SA, 75016 Paris (FR)
(72) Inventeur: Maineult, Jean, 01250 Revonnas (FR); Pluveau, Raymond, 7100 Macon (FR); Joyeux-Bouillon, Bernard, 69640 St Julien (FR)
(74) Mandataire: Gosse, Michel

(56) Documents cités:
- EP-A- 0 224 051
- EP-A- 0 291 762
- EP-A- 0 311 472
- CH-C- 403 922
- DE-A- 3 519 761
- DE-A- 3 641 573
- DE-A- 4 111 586
- FR-A- 2 259 459
- FR-A- 2 351 522
- FR-A- 2 620 564

## Description

La présente invention est relative à un poste de distribution d'énergie électrique à moyenne tension.

On connaît de tels postes comprenant un appareil de coupure, tel qu'un disjoncteur, disposé dans une enceinte métallique étanche remplie de gaz à bonnes propriétés diélectriques. D'autres postes comprennent un interrupteur, disposée dans une enceinte métallique étanche remplie de gaz diélectrique, relié en série avec des fusibles placés dans un compartiment séparé.

Dans ces tyes de postes, le remplacement d'un appareil défectueux nécessite de mettre le poste hors tension et de vidanger le gaz d'isolement. Ces manoeuvres sont relativement longues de sorte que la fourniture de courant à l'utilisateur est interrompue pendant une durée qui n'est plus acceptable.

Du document de brevet FR-2 259 459, on connait un poste conforme au préambule de la revendication 1.

Un but de la présente invention est de concevoir un poste dans lequel le remplacement d'un appareil de coupure peut se faire sans nécessiter de mettre le poste hors tension, et de préférence sans manipuler de gaz.

Un autre but de l'invention est de concevoir un poste dans lequel les appareillages peuvent être réalisés dans un site différent de celui du montage du poste, afin de profiter au mieux des compétences techniques locales.

Un autre but de l'invention est de concevoir un poste dont le démontage en fin de vie est aisé, de manière à satisfaire aux nécessités écologiques de plus en plus exigeantes.

Ces buts sont atteints par le poste de l'invention tel que défini par la revendication 1.

L'invention sera bien comprise à la lecture de la description ci-après d'un mode préféré de réalisation de l'invention, en référence au dessin annexé dans lequel:
- la figure 1 est une vue en perspective éclatée d'un poste réalisant deux fonctions d'interrupteurs en boucle et une fonction de protection par disjoncteur,
- la figure 2 est une vue en élévation partiellement en coupe du poste de la figure 1,
- la figure 3 est une vue en coupe d'une coquille utilisée dans le poste de l'invention,
- la figure 4 est une vue en coupe d'un poste selon une variante réalisant la protection par fusibles.

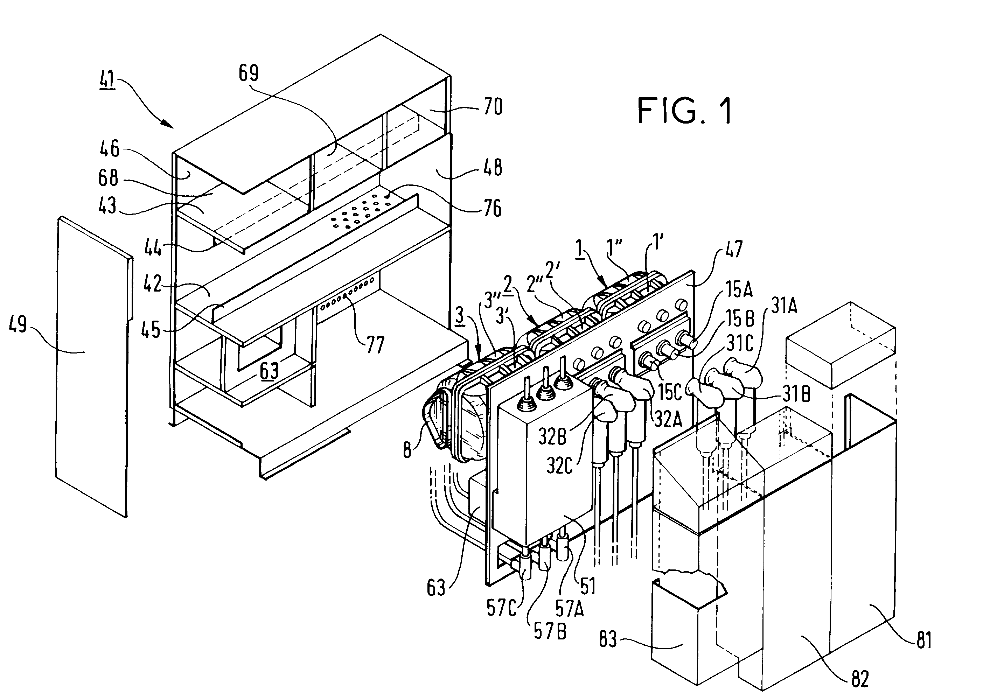

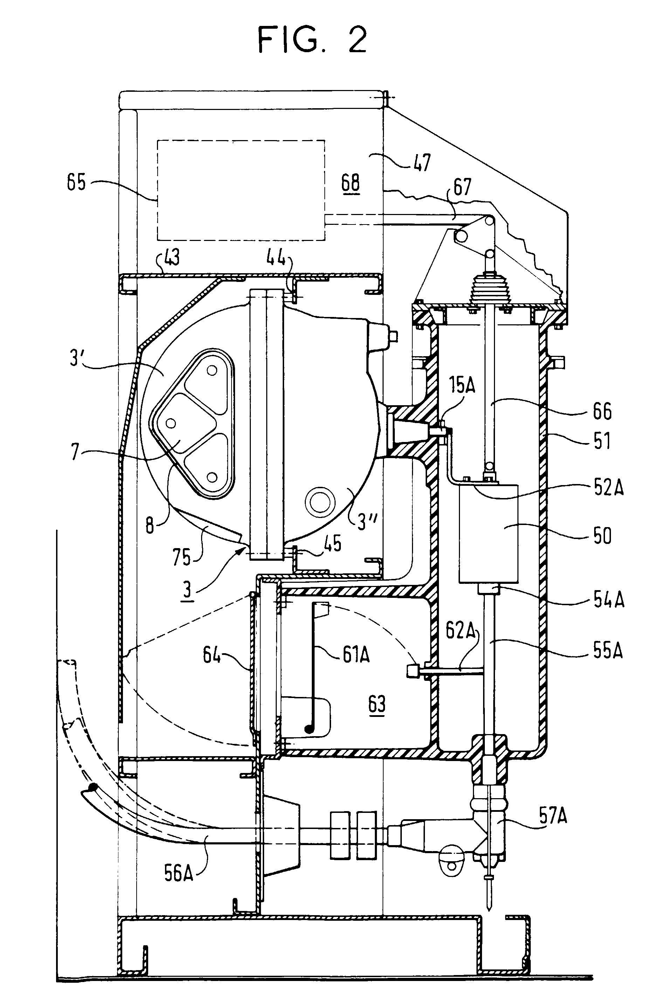

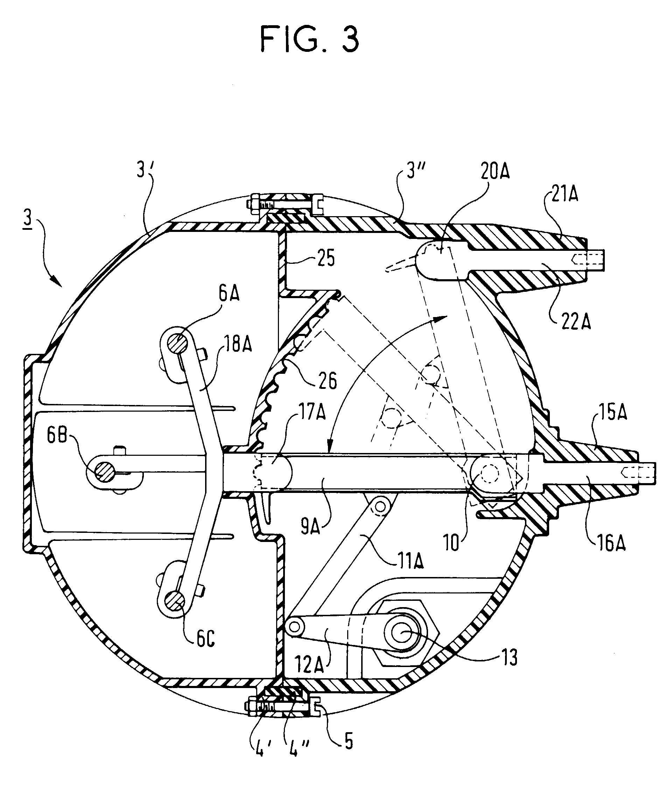

Dans le Fig.1, les références 1, 2 et 3 désignent trois coquilles identiques dont la constitution est décrite en détail en référence aux Fig. 2 et 3.

On ne décrira en détail que la coquille 3; lorsque des ensembles triphasés apparaîtront et qu'il sera possible de distinguer les éleménts correspondant à chacune des phases, cette distinction sera faite au moyen des lettres A, B et C.

La coquille 3 est constituée de deux demi-coquilles 3' et 3", réalisées en matériau thermodurcissable ou thermoplastique. La coquille comporte une surface conductrice externe mise à la terre jouant 1' rôle d'écran électrique et rendant la coquille insensible à la pollution atmosphérique.

Les demi-coquilles peuvent être assemblées de manière étanche au moyen des brides 4' et 4" serrées par des boulons 5, avec interposition d'un joint non représenté. Une coquille a sensiblement l'aspect d'un cylindre comprenant une surface cylindrique délimitée par deux faces parallèles planes.

Les coquilles sont remplies d'un gaz à bonnes propriétés diélectriques tel que l'hexafluorure de soufre SF6, sous une pression pouvant atteindre quelques bars, mais pouvant être inférieure si la tension de service l'exige.

La demi-coquille 3' contient un jeu de barres triphasé comprenant les barres 6A, 6B et 6C. Ces barres traversent la paroi de la demi-coquille 3' par une ouverture 7 et s'étendent à l'intérieur des demi-coquilles homologues 2' et 1' des coquilles 2 et 1. Pour cela , la demi-coquille centrale 2' comporte des ouvertures sur chacune de ses faces planes, tandis que les demi-coquilles 1' et 3' ne comportent qu'une ouverture.

Les coquilles sont disposées côte-à-côte, de sorte que le volume d'une coquille communique avec le volume de la coquille adjacente; les ouvertures des coquille sont mises en contact par l'intermédiaire de joints tel que 8 pour assurer l'étanchéité de l'ensemble.

La demi-coquille 3" contient un interrupteur à trois positions, comprenant trois bras de contact pivotant avec un arbre commun isolant 10. Seul le bras 9A de la phase A est visible dans la Fig.3. Ce qui sera dit à propos du bras 9A s'appliquera, mutatis mutandis, aux autres bras. Le bras de contact est manoeuvré au moyen d'un embiellage comprenant la bielle 11A et le levier 12A; le levier 12A est articulé à un arbre 13 traversant de manière étanche la demi-coquille 3" et pouvant ainsi être manoeuvré de l'extérieur de la demi-coquille 3".

Le bras 9A est relié, du côté de l'articulation 10, à une première traversée électrique 15A débouchant de manière étanche à l'extérieur de la demi-coquille 3". Cette traversée comprend une portion isolante venue de moulage avec la demi-coquille 3" et un conducteur intérieur 16A destiné à être connecté électriquement comme il sera indiqué plus loin.

Le bras 9A coopère tout d'abord (première position) avec un contact 17A relié par un conducteur 18A à la barre 6A; par ailleurs, le bras 9A coopère (seconde position) avec un contact 20A disposé à l'extrémité d'une seconde traversée électrique 21A comprenant une partie isolante venue de moulage avec la demi-coquille 3" et un conducteur intérieur 22A. Le conducteur de cette seconde traversée est destinée à être relié à la terre. Le bras 9A peut prendre une troisième position, intermédiaire entre les première et seconde positions. Dans cette troisième position, le contact 9A est isolé du contact 17A et du contact 20A.

Une paroi isolante 25 sépare les deux demi-coquilles 3' et 3"; l'arbre isolant 10, au cours de la manoeuvre d'ouverture et de fermeture, se déplace à proximité de la paroi isolante 25, assurant un déplacement du gaz diélectrique et permettant la coupure du courant.

La paroi isolante 25 comporte des crans 26 la protégeant des dégradations causées par l'arc électrique.

Comme le montre la Fig.1, les premières traversées 15A, 15B et 15C de la coquille 1 sont reliées à des câbles d'arrivée par des connecteurs 31A, 31B et 31C.

De même, les premières traversées de la coquille 2 sont reliées à des câbles par des connecteurs 32A, 32B et 32C.

Les coquilles 1, 2 et 3 sont disposées dans une structure métallique désignée globalement dans la Fig.1 par la référence 41.

Cette structure est faite de tôles métalliques découpées, pliées et assemblées par rivetage ou agrafage. Cette méthode de fabrication, qui exclut le soudage, est particulièrement économique et permet en outre, en fin de vie de l'appareillage, un démontage facile et une récupération aisée des matériaux réutilisables.

Les demi-coquilles 1 à 3 sont disposées entre deux tôles horizontales 42 et 43 parallèles, et fixées par pincement au montage des demi-coquilles sur des éléments de tôle 44 et 45.

La structure comprend une tôle 46 constituant la face arrière du poste, une plaque avant 47 munie d'orifices pour le passage des premières et secondes traversées des coquilles, et des tôles latérales 48 et 49.

La coquille 3, dans l'exemple de poste décrit maintenant, est relié à un appareil de coupure.

Ce dernier est par exemple un disjoncteur triphasé à vide ou à hexafluorure de soufre SF6. Seul le pôle 50A du disjoncteur est visible dans la Fig.2. Le disjoncteur est placé à l'intérieur d'un caisson 51 en matériau isolant thermodurcissable ou thermoplastique à surface conductrice, solidarisé à la plaque de fond 47. Ce disjoncteur comprend un premier jeu de prises de courant; parmi elles, la prise 52A est visible dans la Fig. 2 et on voit qu'elle est reliée à la traversée 15A de la coquille 3. Le disjoncteur comprend un second jeu de prises reliées par des conducteurs à des câbles de sortie par l'intermédiaire de connecteurs. Dans la Fig.2, on distingue la prise 54A reliée par le conducteur 55A au câble 56A par le connecteur 57A. On distingue dans la Fig.1 les connecteurs des autres phases, 57B et 57C.

Le disjoncteur est également relié à un sectionneur de terre. On distingue dans la Fig.2 un bras 61A du sectionneur de terre et le conducteur de liaison correspondant 62A.

Le sectionneur de terre est placé dans un compartiment 63 placé sous la demi-coquille 3"; le fond de ce compartiment est munie d'un volet pivotant 64 qui peut s'ouvrir en cas de défaut à l'intérieur de compartiment 51 et permettre d'évacuer les gaz vers l'arrière du poste.

Le disjoncteur 50 est actionné par une commande 65 manoeuvrée par un train de tiges 66-67; la commande, connue en soi et ne faisant pas partie de l'invention, a été simplement représentée par un rectangle en traits tiretés. La commande 65 est disposée dans un compartiment 68 surmontant la coquille 3.

Des compartiments 69 et 70, adjacents au compartiment 68, peuvent être utilisés pour placer tout l'appareillage basse tension qui existe dans tout poste à moyenne tension.

On note que les coquilles 1 à 3 comportent chacune une zone 75 à rupture contrôlée, qui se rompt lorsqu'en cas de défaut, la pression à l'intérieur de la coquille dépasse une valeur prédéterminée.

Le gaz s'échappe par une série de trous 76 pratiqués dans la plaque 42 et de trous 77 pratiqués dans la plaque arrière 46.

Le poste est complété par des capotages 81, 81 et 83 protégeant les câbles d'arrivée et de départ.

Le poste de l'invention peut être facilement adapté à des évolutions éventuelles d'exploitation du réseau. Ainsi, par exemple, il est possible de remplacer la fonction disjoncteur contenue dans le caisson 51, par une fonction fusibles, le caisson 51 devenant un puits pour les fusible.

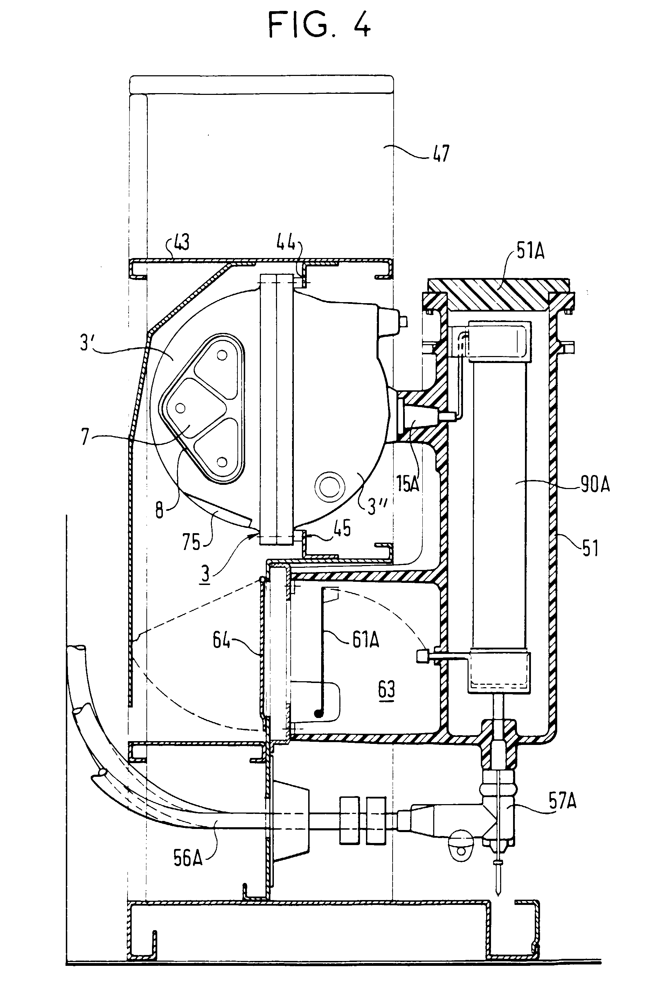

Cette évolution est illustrée par la Fig.4 qui est une vue partielle en coupe d'un poste comportant deux départs en boucle et une protection de transformateur par fusible.

Comme on l'a déjà mentionné, le poste de la Fig.4 diffère de celui décrit en référence aux figures précédentes en ce que l'appareil de coupure 50 est remplacé par des fusibles. Ceux-ci sont contenus dans le caisson 51, fermé par un couvercle amovible 51A facilement retiré lors du remplacement des fusibles.

Le fusible 90A de la phase A est visible dans la Fig.4 et est connecté à la sortie 15A et au connecteur 57A.

Les avantages du poste dont deux variantes viennent d'être décrites sont multiples:
- il est de construction simple et économique,
- il permet de séparer les activités de fabrication des appareillages, qui nécessitent un grand niveau de qualité, et les activités de montage, qui peuvent être faites sur le site d'utilisation par une main d'oeuvre moins spécialisée,
- il permet le remplacement sous tension de certains appareillages, ce qui assure une plus grande continuité de service,
- il permet d'éviter le plus souvent toute manipulation de gaz, ce qui est un avantage écologique évident,
- il permet un recyclage économique en fin de vie,
- il est susceptible d'une évolution rapide permettant un adaptation aisée aux changements d'exploitation du réseau.

L'invention n'est pas limitée aux exemples décrits; bien au contraire, la conception de poste indiquée permet de réaliser, avec les mêmes moyens, des postes à isolement dans l'air et coupure dans le SF6 ou des postes à isolement total dans le SF6, dans toutes les configurations possibles d'utilisation.

## Revendications

1. Poste à moyenne tension comprenant au moins deux coquilles (1, 2, 3) en matériau isolant remplies d'un gaz à bonnes propriétés diélectriques, lesdites coquilles contenant chacune un interrupteur (9A) triphasé à trois positions, une première position dans laquelle l'interrupteur relie chacune des barres (6A, 6B, 6C) d'un jeu de barres triphasé à des premières traversées électriques étanches (15A, 15B, 15C) débouchant à l'extérieur de la coquille, une seconde position dans laquelle l'interrupteur relie lesdites premières traversées (15A, 15B, 15C) à des secondes traversée étanches (21A, 21B, 21C) débouchant à l'extérieur de la coquille et reliées à la terre, une troisième position dans laquelle chacune des premières traversées (15A, 15B, 15C) est déconnectée de la barre correspondante (6A, 6B, 6C), les premières traversées d'au moins une coquille (1, 2) étant chacune connectées électriquement à un câble monophasé, les premières traversées d'une coquille étant connectées électriquement soit à un fusible (90A), soit à un pôle (50A) d'un disjoncteur, les fusibles et/ou pôle de disjoncteur étant placés dans un compartiment en matériau isolant (51), caractérisé en ce que chaque coquille est munie d'au moins une ouverture (7) pour la traversée étanche du jeu de barres triphasé (6A, 6B, 6C), les coquilles étant disposées côte-à-côte avec leurs ouvertures en contact pour définir un seul volume intérieur étanche, chaque coquille (1, 2, 3) étant constituée de deux demi- coquilles (1'-1" ; 2'-2" ; 3'-3") assemblées par vissage et séparées par une paroi isolante (25) comportant des crans (26) de protection contre l'arc électrique, en ce que les coquilles sont disposées dans une structure (41) constituée de tôles métallique pliées et assemblées par agrafage ou rivetage et sont fixées à la structure (41) par coincement des deux demi-coquilles (1'-1" ; 2'-2" ; 3'-3") entre un ou plusieurs (44, 45) éléments de tôle de l'ossature du compartiment, le disjoncteur (50A) ou les fusibles (90A) étant reliés à un sectionneur de terre (61A) disposé dans un compartiment (63) de la structure (41), placé au-dessous de la coquille (3) à laquelle ce disjoncteur ou ces fusibles sont reliés.

2. Poste selon la revendication 1, dans lequel les coquilles comportent une surface externe conductrice mise à la terre.

3. Poste selon l'une des revendications 1 ou 2, dans lequel ledit compartiment (63) du sectionneur de terre (61A) est muni d'un volet pivotant (64) pour l'évacuation des gaz en cas de défaut dans le compartiment (51) du disjoncteur ou des fusibles.

4. Poste selon l'une des revendications 1 à 3, dans lequel les coquilles (1, 2,3) comportent une zone de rupture (75) pour l'évacuation des gaz en cas de défaut interne.

5. Poste selon l'une des revendications 1 à 4, dans lequel les coquilles (1, 2, 3) sont disposées dans un compartiment de la structure comprenant deux tôles horizontales (42, 43), des tôles latérales (48, 49), une tôle de face avant (46) et une tôle arrière (47).

6. Poste selon la revendication 5, caractérisé en ce que une partie (42, 46) des tôles constituant le compartiment des coquilles est percé de trous pour l'évacuation des gaz en cas de rupture de l'une au moins des zones de rupture (75).

## Patentansprüche

1. Mittelspannungsschaltanlage, umfassend zumindest zwei Schalen (1, 2, 3) aus isolierendem Material, die mit einem Gas mit geeigneten dielektrischen Eigenschaften gefüllt sind, wobei die Schalen jeweils einen Dreiphasenschalter (9A) mit drei Positionen enthalten, einer ersten Position, in welcher der Schalter jeden der Stäbe (6A, 6B, 6C) eines Satzes an Dreiphasenstäben mit ersten dichten elektrischen Durchtritten (15A, 15B, 15C) verbindet, die äußerlich der Schale münden, einer zweiten Position, in welcher der Schalter die ersten Durchtritte (15A, 15B, 15C) mit zweiten dichten Durchtritten (21A, 21B, 21C) verbindet, die äußerlich der Schale münden und mit der Erdung verbunden sind, einer dritten Position, in welcher jeder der ersten Durchtritte (15A, 15B, 15C) von dem entsprechenden Stab (6A, 6B, 6C) getrennt ist, wobei die ersten Durchtritte von zumindest einer Schale (1, 2) jeweils elektrisch mit einem einphasigen Kabel verbunden sind, wobei die ersten Durchtritte einer Schale elektrisch entweder mit einer Sicherung (90A) oder einem Pol (50A) eines Überlastschalters verbunden sind, wobei die Sicherungen und/oder Überlastschalterpole in einem Abteil aus isolierendem Material (51) angeordnet sind, dadurch gekennzeichnet, dass jede Schale mit zumindest einer Öffnung (7) für den dichtenden Durchtritt des Satzes an Dreiphasenstäben (6A, 6B, 6C) versehen ist, wobei die Schalen nebeneinander mit ihren Öffnungen in Berührung angeordnet sind, um ein einzelnes dichtes Innenvolumen zu definieren, wobei jede Schale (1, 2, 3) aus zwei Halbschalen (1'-1"; 2'-2"; 3'-3") gebildet ist, zusammengebaut durch Verschraubung und getrennt durch eine isolierende Wandung (25), welche Schutzschirme (26) gegen einen elektrischen Bogen umfasst, und dass die Schalen in einer Struktur (41), gebildet aus metallischen Blechen, die gefaltet und zusammengebaut sind durch Verheftung oder Vernietung angeordnet und an der Struktur (41) durch Verklemmung der zwei Halbschalen (1'-1"; 2'-2"; 3'-3") zwischen einer oder mehreren Blechelementen (44, 45) des Gerüstes des Abteiles befestigt sind, wobei der Überlastschalter (50A) oder die Sicherungen (90A) mit einem Erdungstrenner (61A) verbunden ist bzw. sind, angeordnet in einem Abteil (63) der Struktur (41), welches sich oberhalb der Schale (3) befindet, mit welcher der Überlastschalter oder die Sicherungen verbunden ist bzw. sind.

2. Schaltanlage nach Anspruch 1, bei welcher die Schalen eine äußere leitende geerdete Fläche umfassen.

3. Schaltanlage nach einem der Ansprüche 1 oder 2, bei welcher das Abteil (63) des Erdungstrenners (61A) mit einer schwenkbaren Klappe (64) zur Evakuierung von Gas in dem Fall eines Fehlers in dem Abteil (51) des Überlastschalters oder der Sicherungen versehen ist.

4. Schaltanlage nach einem der Ansprüche 1 bis 3, bei welcher die Schalen (1, 2, 3) eine Bruchstelle (75) zur Evakuierung von Gas im Fall eines internen Fehlers umfassen.

5. Schaltanlage nach einem der Ansprüche 1 bis 4, bei welchen die Schalen (1, 2, 3) in einem Abteil der Struktur angeordnet sind, umfassend zwei horizontale Bleche (42, 43), seitliche Bleche (48, 49), ein Frontblech (46) und ein hinteres Blech (57).

6. Schaltanlage nach Anspruch 5, dadurch gekennzeichnet, dass ein Teil (42, 46), der das Abteil der schalenbildenden Bleche mit Löchern zur Evakuierung von Gas im Fall des Brechens von zumindest einer der Bruchstellen (75) durchbohrt ist.

## Claims

1. A medium-voltage substation including at least two insulative material chambers (1, 2, 3) filled with a gas having good dielectric properties, said chambers each containing a three-position three-phase switch (9A) having a first position in which said switch connects each of the busbars (6A, 6B, 6C) of a set of three-phase busbars to first gas-tight electrical feed-throughs (15A, 15B, 15C) leading to the outside of said chamber, a second position in which said switch connects said first feed-throughs (15A, 15B, 15C) to second gas-tight feed-throughs (21A, 21B, 21C) leading to the outside of said chamber and connected to ground, and a third position in which each of said first feed-throughs (15A, 15B, 15C) is disconnected from the corresponding busbar (6A, 6B, 6C), said first feed-throughs of at least one chamber (1, 2) being each electrically connected to a single-phase cable, said first feed-throughs of a chamber being electrically connected either to a fuse (90A) or to a pole (50A) of a circuit-breaker, said fuses and/or circuit-breaker pole being disposed in an insulative material compartment (51) characterized in that each shell has an opening (7) through which the three-phase set of busbars (6A, 6B, 6C) passes and to which the three-phase set of busbars (6A, 6B, 6C) is sealed, the shells being disposed side-by-side with their openings in contact to define a single sealed internal volume, each shell (1, 2, 3) comprising the half-shells (1'-1"; 2'-2"; 3'-3") screwed together and separated by an insulative wall (25) including recesses (26) for protection against electrical arcing, and in that the shells are disposed in a structure (41) made up of metal plates bent to shape and clipped or riveted together and are fixed to the structure (41) by wedging the two half-shells (1'-1"; 2'-2"; 3'-3") between one or more sheet metal members (44, 45) of the framework of the compartment, the circuit-breaker (50A) or the fuses (90A) being connected to a grounding switch (61A) disposed in a compartment (63) of the structure (41) under the shell (3) to which the circuit-breaker is connected or the fuses are connected.

2. The substation according to claim 1 in which said chambers have a grounded conductive external surface.

3. The substation according to claim 1 or claim 2 in which said compartment (63) containing said grounding switch (61A) has a pivoting flap (64) for evacuation of said gas in the event of a fault in said compartment (51) containing said circuit-breaker or said fuses.

4. The substation according to any of claims 1 to 3 in which said chambers (1, 2, 3) have a rupture area (75) for evacuation of said gas in the event of an internal fault.

5. The substation according to any of claims 1 to 4 in which said chambers (1, 2, 3) are disposed in a compartment of said structure comprising two horizontal plates (42, 43), side plates (48, 49), a front face plate (46) and a backplate (47).

6. The substation according to claim 5 characterized in that some (42, 46) of said plates constituting said compartment containing said chambers incorporate holes for evacuation of said gas in the event of rupture of at least one of said rupture areas (75).
